Europäisches Patentamt

European Patent Office

Office européen des brevets

(19)

(11) **EP 1 571 642 A2**

(12) **EUROPEAN PATENT APPLICATION**

(43) Date of publication:
**07.09.2005 Bulletin 2005/36**

(51) Int Cl.$^7$: **G09G 3/28**

(21) Application number: **05004425.4**

(22) Date of filing: **01.03.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **05.03.2004 KR 2004015138**

(71) Applicant: **LG ELECTRONICS INC.
Seoul (KR)**

(72) Inventor: **Moon, Seong Hak
Guro-gu Seoul, 152-774 (KR)**

(74) Representative: **Rupprecht, Kay et al
Meissner, Bolte & PartnerGbR
Postfach 10 26 05
86016 Augsburg (DE)**

(54) **Driving method for plasma display panel**

(57)     Provided is a driving method for a plasma display panel capable of prolonging a life span of the plasma display panel and improving luminous efficiency thereof by preventing an accumulation of positive charges on an address electrode of the plasma display panel. For the purpose in the present invention, voltage pulses having different polarities and sizes are applied to a pair of sustain electrodes of a plasma display panel while sustaining a discharge for the plasma display panel.

FIG. 4

EP 1 571 642 A2

**Description**

BACKGROUND OF THE INVENTION

1. Field of the Invention

The present invention relates to a driving method for a plasma display panel (PDP), and particularly, to a driving method for a plasma display panel capable of improving luminous efficiency thereof and prolonging a life span thereof.

2. Description of the Conventional Art

A general plasma display panel (PDP) is typically a display in which ultraviolet rays generated by the discharge of inactive gas, which is obtained by mixing helium (He) and xenon (Xe) or neon (Ne) and xenon (Xe), excite phosphors to realize images including texts or graphics. The plasma display panel is characterized by facilitating its scale-up, and providing a superior image quality and a fast response speed. Also, since the plasma display panel is possible to be thin, it attracts attention as a wall-mounted display together with a field emission display, a thin film transistor liquid crystal display, or the like.

A monochromatic plasma display panel device directly uses visible rays emitted from a discharge gas in order to display images. There may, for instance, be a PDP using orange rays given out from a neon (Ne) gas. In case that full color is required to be displayed, the PDP uses visible rays generated by allowing ultraviolet rays generated from the discharge gas such as krypton (Kr) or Xenon (Xe) to excite phosphors for red (R), green (G), and blue (B).

The plasma display panel is a display device using a discharge of gas so as to be also called as a gas discharge display device.

The plasma display panel is classified depending on types of the discharge into a DC type, an AC type, or a hybrid type. The DC type has characteristics that an electrode used for applying a voltage supplied from the external to form the plasma is directly exposed to the plasma and thus a conduction current directly flows through the electrode. The AC type has characteristics that the electrode is covered with a dielectric not to be directly exposed to the plasma and thus a displacement current flows through the electrode.

Also, the plasma display panel may also be classified depending on how the electrode is arranged into an opposed discharge type, a surface discharge type, a barrier discharge type, or the like. In particular, as an example of the surface discharge type, a three-electrode surface discharge type alternating current plasma display panel is comprised of: sustain electrodes located in parallel at a lower portion of a same upper glass substrate; an upper substrate including a dielectric covering the sustain electrodes; and a lower substrate placed at an upper portion of the lower glass substrate, having a certain interval by a barrier structure, and including an address electrode which is formed to be intersected with the sustain electrodes in its vertical direction. The discharge gas is sealed in a space between the upper and lower substrates and the barrier structure is sealed. In the three-electrode surface discharge type alternating current plasma display panel, wall charges are accumulated on the surface of the dielectric which covers the sustain electrodes during the discharge for the display panel, and displays data using memory characteristics by the accumulated wall charge.

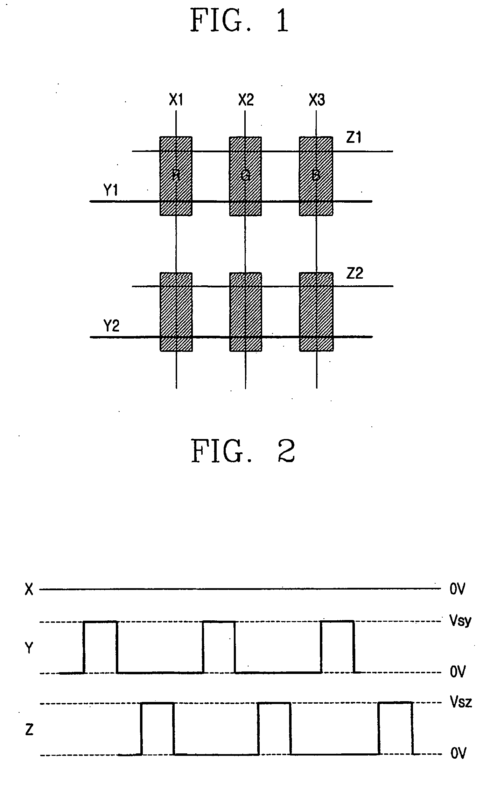

Hereinafter, with reference to Figures 1 through 3, it will be explained a sustain discharge driving method by illustrating the general three-electrode surface discharge type alternating current plasma display panel.

Figure 1 briefly shows discharge cells in the general three-electrode surface discharge type alternating current plasma display panel.

Referring to Figure 1, a single discharge cell of the general three-electrode surface discharge type alternating current plasma display panel (hereinafter, the plasma display panel) is comprised of: two sustain electrodes (Y electrode and Z electrode) located on the same surface, address electrode (X electrode) vertically intersecting with the sustain electrodes, and phosphor placed between the sustain electrodes and the address electrode.

Figure 2 shows operational waveforms applied to each electrode while sustaining a discharge for the general plasma display panel based on the conventional art.

Figure 3 shows charges formed on each electrode while sustaining the discharge for the general plasma display panel based on the conventional art.

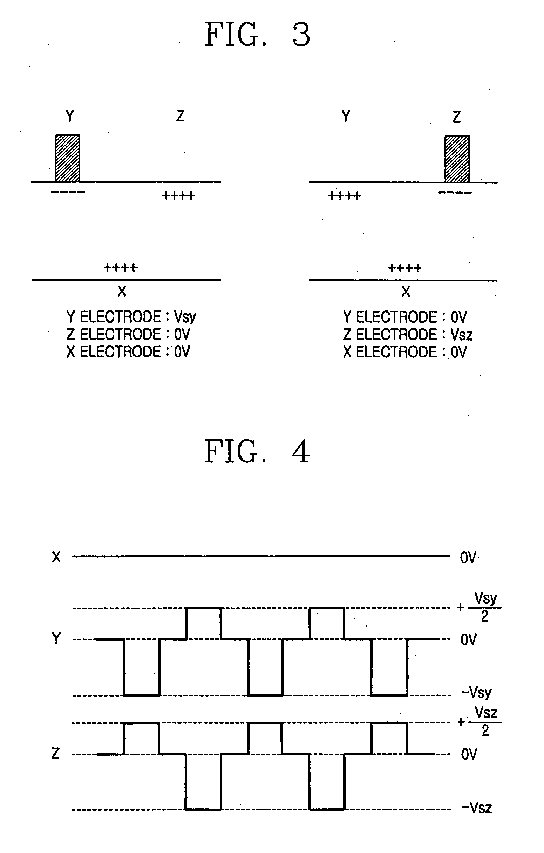

As shown in Figure 2, in the conventional sustain discharge driving method for the general plasma display panel, the sustain discharge is performed by alternately applying a first predetermined positive voltage pulse Vsy and a second predetermined positive voltage pulse Vsz to the discharge sustain electrodes (Y sustain electrode and Z sustain electrode). In response to this, as shown in Figure 3, positive charges are always accumulated in the address electrode (X electrode) without regard to the first and second predetermined positive voltage pulses Vsy and Vsz applied to the Y sustain electrode and the Z sustain electrode while sustaining the discharge for the plasma display panel based on the conventional art.

However, when sustaining the discharge, if the positive charges are accumulated on the address electrodes (X electrodes), particles of the electrodes come off by an impact between phosphors of the discharge cell and positive ions cling to the inside of the wall of the discharge cell, which results in degrading luminous efficiency of the plasma display panel and enhancing aging of the phosphors. As a result, the plasma display panel disadvantageously has had a shorter life span.

## SUMMARY OF THE INVENTION

Therefore, an object of the present invention is to provide a driving method for a plasma display panel capable of prolonging a life span of the plasma display panel and improving luminous efficiency thereof by preventing an accumulation of positive charges in address electrodes by means of applying voltage pulses having different polarities and sizes to each sustain electrode of a pair of sustain electrodes while sustaining a discharge of the plasma display panel.

To achieve these and other advantages and in accordance with the purpose of the present invention, as embodied and broadly described herein, there is provided a driving method for a plasma display panel in which, when sustaining a discharge for the plasma display panel, voltage pulses having different polarities and sizes are applied to a pair of sustain electrodes of the plasma display panel.

The foregoing and other objects, features, aspects and advantages of the present invention will become more apparent from the following detailed description of the present invention when taken in conjunction with the accompanying drawings.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 briefly shows a discharge cell in the general three-electrode surface discharge type alternating current plasma display panel;

Figure 2 shows operational waveforms applied to each electrode while sustaining a discharge for the general plasma display panel based on the conventional art;

Figure 3 shows charges formed on each electrode while sustaining the discharge for the general plasma display panel based on the conventional art;

Figure 4 shows waveforms of sustain discharge pulses applied to each electrode in a sustain discharge in accordance with an embodiment of the driving method for the plasma display panel of the present invention;

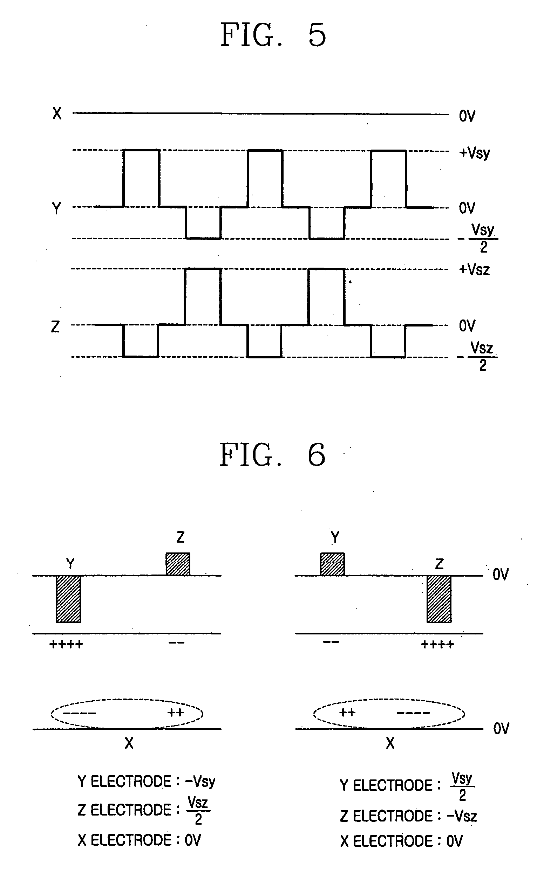

Figure 5 shows waveforms of sustain discharge pulses applied to each electrode in the sustain discharge in accordance with an embodiment of the driving method for the plasma display panel of the present invention;

Figure 6 shows charges accumulated on each electrode of the plasma display panel when applying sustain discharge pulses to sustain electrodes as shown in Figure 4; and

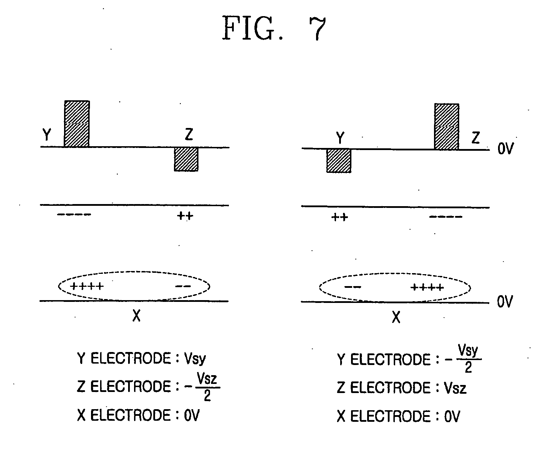

Figure 7 shows charges accumulated on each electrode of the plasma display panel when applying sustain discharge pulses to the sustain electrodes as shown in Figure 5.

## DETAILED DESCRIPTION OF THE PREFERRED EMBODIMENTS

Reference will now be made in detail to the preferred embodiments of the present invention, examples of which are illustrated in the accompanying drawings.

With reference to Figures 4 through 7, it will be explained in detail of a driving method for a plasma display panel capable of prolonging a life span of the plasma display panel and improving luminous efficiency thereof by preventing an accumulation of positive charges on address electrodes by means of applying voltage pulses having different polarities and sizes to each sustain electrode of a pair of sustain electrodes, when sustaining a discharge of the plasma display panel.

An apparatus for performing the driving method for the plasma display panel according to the present invention preferably includes a sustain electrode driver which can drive sustain electrodes (Y electrode and Z electrode) by applying positive or negative voltage pulses (i.e., sustain discharge pulse). The sustain electrode driver includes a plurality of switching units which are controlled by a switching control signal inputted from the external, and a driving voltage controller capable of controlling positive or negative driving voltages inputted to the sustain electrodes. The plurality of switching units apply the sustain discharge pulses to the sustain electrodes (Y electrode and Z electrode) depending on the switching control signal, and the sustain discharge pulses are generated by a separate sustain discharge pulse circuit to be applied to the sustain electrodes (Y electrode and Z electrode).

Figures 4 and 5 show waveforms of the sustain discharge pulses applied to each electrode while sustaining the discharge in an embodiment of the driving method for the plasma display panel according to the present invention.

Referring to Figures 4 and 5, in the embodiment of the driving method for the plasma display panel according to the present invention, when sustaining the discharge for the plasma display panel, a positive voltage pulse and a negative voltage pulse (i.e., sustain discharge pulse) are alternately applied to the sustain electrodes (Y electrode and Z electrode) of a discharge cell. During this, the positive voltage pulse and the negative voltage pulse applied to each sustain electrode have different sizes from each other. The waveforms of the sustain discharge pulses as shown in Figure 4 correspond to a case where the positive voltage pulse has a size smaller than that of the negative voltage pulse, while the waveforms of the sustain discharge pulses as shown in Figure 5 correspond to a case where the positive voltage pulse has a size greater than that of the negative voltage pulse.

The positive voltage pulse and the negative voltage pulse applied to the Y sustain electrode and the positive voltage pulse and the negative voltage pulse applied to the Z sustain electrode may have the ratio of sizes therebetween of 1:2 shown in Figure 4 or 2:1 shown in Figure 5. That is, as shown in Figure 4, the Y sustain electrode receives the voltage pulses of $-Vsy$ and $+\frac{Vsy}{2}$, and the Y sustain electrode receives the voltage pulses of $+\frac{Vsz}{2}$ and $-Vsz$. Also, as shown in Figure 5, the Y sustain electrode receives the voltage pulses of $+Vsy$ and $-\frac{Vsy}{2}$, and the Z sustain electrode receives the voltage pulses of $-\frac{Vsz}{2}$ and $+Vsz$.

Here, the voltage pulses applied to the sustain electrodes (Y electrode and Z electrode) may be generated by including a voltage-multiplication circuit in the sustain voltage pulse circuit of the sustain electrode driver (not shown) which drives the sustain electrodes (Y electrode and Z electrode). That is, in case of applying a high voltage, the applied voltage of $\pm\frac{Vsy}{2}$ or $\pm\frac{Vsz}{2}$ is changed to $\pm Vsy$ or $\pm Vsz$ through the voltage-multiplication circuit and then applied to the sustain electrodes. While, in case of applying a low voltage, the applied voltage $\pm\frac{Vsy}{2}$ or $\pm\frac{Vsz}{2}$ is directly applied to the sustain electrodes.

Here, as aforementioned, instead of establishing the ratio of sizes of the sustain voltage pulses as 1: 2 or 2:1, if constructing a circuit in which the size of the applied voltage is optionally controlled and outputted, the ratio of sizes of the positive voltage pulse and the negative voltage pulse applied to each sustain electrode can be controlled optionally.

Now, the embodiments of the driving method for the plasma display panel according to the present invention will be described in more detail.

Still referring to Figure 4, in the driving method for the plasma display panel according to the present invention, a negative voltage pulse is applied to the Y sustain electrode of a discharge cell and simultaneously a positive voltage pulse is applied to the Z sustain electrode during a first predetermined time. Then, a ground voltage is simultaneously applied to both the Y and Z sustain electrodes during a second predetermined time. Afterwards, the positive voltage pulse is applied to the Y sustain electrode and simultaneously the negative voltage pulse is applied to the Z sustain electrode during the first predetermined time.

Also, still referring to Figure 5, in the driving method for the plasma display panel according to the present invention, after a positive voltage pulse is applied to the Y sustain electrode of a discharge cell and simultaneously a negative voltage pulse is applied to the Z sustain electrode during a first predetermined time, a ground voltage is applied to both the Y and Z sustain electrodes during a second predetermined time. Afterwards, the negative voltage pulse is applied to the Y sustain electrode and simultaneously the positive voltage pulse is applied to the Z sustain electrode.

Hereinafter, a distribution of charges accumulated on address electrodes (X electrodes) in accordance with an embodiment of the driving method for the plasma display panel of the present invention will be explained with reference to Figures 6 and 7.

Figure 6 shows charges accumulated on each electrode of the plasma display panel when applying sustain discharge pulses to the sustain electrodes as shown in Figure 4.

Figure 6 shows the case where the size of the negative voltage pulse applied to the Y and Z sustain electrodes is greater than that of the positive voltage pulse applied thereto, whereas the charges accumulated on the address electrode (X electrode) are negative charges. In other words, as shown in Figure 4, once applying the discharge sustain voltage pulse to the sustain electrodes, the negative charges relatively more than the positive charges are accumulated on the address electrode (X electrode) by the negative voltage pulse which is greater than the positive voltage pulse. On the other hand, the positive charges less than the accumulated negative charges are accumulated, which results in accumulating the negative charges on the whole.

Figure 7 shows charges accumulated on each electrode of the plasma display panel when applying the sustain discharge pulses to the sustain electrodes as shown in Figure 4.

Figure 7 shows the case where the size of the positive voltage pulse applied to the Y and Z sustain electrodes is greater than that of the negative voltage pulse applied thereto. That is, the charges accumulated to the address electrode (X electrode) are positive charges but the amount of the positive charges accumulated on the address electrodes in the embodiment according to the present invention is less than the amount of the positive charges accumulated on the address electrodes in the conventional driving method. As a result, the influence on the phosphors by the accumulated positive charges can be reduced.

As another embodiment, both the two driving methods shown in Figures 4 and 5 may be carried out and used together. For instance, among the discharge cells of the plasma display panel, the discharge cells in an odd field drive the sustain electrodes by the driving method shown in Figure 4 and the discharge cells in an even field drive the sustain electrodes by the driving method shown in Figure 5. According to this, the charges accumulated on the address electrodes can be neutralized. That is, the negative charges are accumulated on the address electrodes in the odd field, and the positive charges are accumulated on the address electrodes in the even field such that the positive and the negative charges are altogether offset and neutralized.

As described so far, in the present invention, when sustaining the discharge of the plasma display panel, the positive charges are prevented from being accumulated on the address electrodes by applying voltage pulses having different polarities and sizes to a pair of sustain electrodes of the plasma display panel. As a result, it is effective to prolong the life span of the plasma display panel and improve luminous efficiency thereof.

Furthermore, in the driving method for the plasma display panel according to the present invention, when sustaining the discharge, the negative voltage pulse is used as the sustain discharge pulse, such that a rising time and a falling time of the pulse become fast to effectively reduce a reactive power.

In addition, in the driving method for the plasma display panel according to the present invention, both the negative and positive voltage pulses are used altogether as the sustain discharge pulse while sustaining the discharge. As a result, it is effective to lower the sustain discharge driving voltage.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A driving method for a plasma display panel, comprising:

   applying voltage pulses having different polarities and sizes to a pair of sustain electrodes of the plasma display panel while sustaining a discharge of the plasma display panel.

2. The method of claim 1, wherein a size of a first negative voltage pulse applied to a first sustain electrode of the pair of sustain electrodes is greater than a size of a first positive voltage pulse applied to the first sustain electrode, and a size of a second negative voltage pulse applied to a second sustain electrode of the pair of sustain electrodes is greater than a size of a second positive voltage pulse applied to the second sustain electrode.

3. The method of claim 1, wherein a size of a first positive voltage pulse applied to a first sustain electrode of the pair of sustain electrodes is greater than a size of a first negative voltage pulse applied to the first sustain electrode, and a size of a second positive voltage pulse applied to a second sustain electrode of the pair of sustain electrodes is greater than a size of a second negative voltage pulse applied to the second sustain electrode.

4. The method of claim 1, wherein in the step of applying the voltage pulses having different polarities and sizes to the pair of sustain electrodes comprises:

   sequentially applying a first negative voltage pulse and a first positive voltage pulse to a first sustain electrode of the pair of sustain electrodes while sequentially applying a second positive voltage pulse and a second negative voltage pulse to a second sustain electrode of the pair of sustain electrodes, when the pair of sustain electrodes are applied to an odd field; and
   sequentially applying the second positive voltage pulse and the second negative voltage pulse to the first sustain electrode while sequentially applying the first negative voltage pulse and the first positive voltage pulse to the second sustain electrode, when the pair of sustain electrodes are applied to an even field.

5. The method of claim 4, wherein the size of the first negative voltage pulse is greater than the first positive voltage pulse, and the size of the second negative voltage pulse is smaller than the size of the second positive voltage pulse.

6. The method of claim 1, wherein in the step of applying the voltage pulses having different polarities and sizes to the pair of sustain electrodes comprises:

   applying a first negative voltage pulse to a first sustain electrode of the pair of sustain electrodes during a first predetermined time while applying a second positive voltage pulse to a second sustain electrode of the pair of sustain electrodes during the first predetermined time; applying a ground voltage to the pair of sustain electrodes during a second predetermined time; and
   applying the first positive voltage pulse to the first sustain electrode during the first predetermined time while applying the second negative voltage pulse to the second sustain electrode during the first predetermined time.

7. The method of claim 6, wherein a size of the first negative voltage pulse is greater than a size of the first positive voltage pulse, and a size of the second negative voltage pulse is greater than a size of the second positive voltage pulse.

**8.** The method of claim 6, wherein a size of the first positive voltage pulse is greater than a size of the first negative voltage pulse, and a size of the second positive voltage pulse is greater than a size of the second negative voltage pulse.

**9.** The method of claim 7, wherein the size of the first negative voltage pulse is two times greater than the size of the first positive voltage pulse, and the size of the second negative voltage pulse is two times greater than the second positive voltage pulse.

**10.** The method of claim 8, wherein the size of the first positive voltage pulse is two times greater than the size of the first negative voltage pulse, and the size of the second positive voltage pulse is two times greater than the size of the second negative voltage pulse.

**11.** The method of claim 9, wherein the first and second negative voltage pulses are generated by a voltage-multiplication circuit.

**12.** The method of claim 10, wherein the first and second positive voltage pulses are generated by the voltage-multiplication circuit.

**13.** A driving method for a plasma display panel, comprising:

alternately applying first voltage pulses having different polarities to a first sustain electrode of a pair of sustain electrodes while sustaining a discharge of the plasma display panel; and alternately applying second voltage pulses having opposite polarities from those of the first voltage pulses to a second sustain electrode of the pair of sustain electrodes while sustaining the discharge of the plasma display panel.

**14.** The method of claim 13, wherein a negative voltage pulse is applied to the first sustain electrode while applying a positive voltage pulse to the second sustain electrode, and the positive voltage pulse is applied to the first sustain electrode while applying the negative voltage pulse to the second sustain electrode.

**15.** The method of claim 14, wherein a size of the negative voltage pulse applied to the first sustain electrode is greater than a size of the positive voltage pulse applied to the first sustain electrode, and a size of the negative voltage pulse applied to the second sustain electrode is greater than a size of the positive voltage pulse applied to the second sustain electrode.

**16.** The method of claim 14, wherein a size of the positive voltage pulse applied to the first sustain electrode is greater than a size of the negative voltage pulse applied to the first sustain electrode, and a size of the positive voltage pulse applied to the second sustain electrode is greater than a size of the negative voltage pulse applied to the second sustain electrode.

**17.** The method of claim 13, wherein a size of a negative voltage pulse applied to the sustain electrodes in an odd field is greater than a size of a positive voltage pulse applied to the sustain electrodes in the odd field when the pair of sustain electrodes are sustain electrodes of discharge cells in the odd field; and wherein a size of a negative voltage pulse applied to the sustain electrodes in an even field is smaller than a size of a positive voltage pulse applied to the sustain electrodes in the even field when the pair of sustain electrodes are sustain electrodes of discharge cells in the even field.

# FIG. 1

# FIG. 2

# FIG. 3

Y        Z           Y        Z

- - - -      + + + +      + + + +      - - - -

$$\frac{++++}{X}$$

$$\frac{++++}{X}$$

Y ELECTRODE : Vsy        Y ELECTRODE : 0V  
Z ELECTRODE : 0V        Z ELECTRODE : Vsz  
X ELECTRODE : 0V        X ELECTRODE : 0V

# FIG. 4

X ——————————— 0V

$+\dfrac{Vsy}{2}$

Y ——— 0V

−Vsy

$+\dfrac{Vsz}{2}$

Z ——— 0V

−Vsz

# FIG. 5

X ———————————————————————————— 0V

---- +Vsy

Y ---- 0V

$-\dfrac{Vsy}{2}$

---- +Vsz

Z ---- 0V

$-\dfrac{Vsz}{2}$

# FIG. 6

Y                    Z                         Y            Z                    0V

++++        --                                --            ++++

----    ++                                    ++    ----         0V

X                                              X

Y ELECTRODE : −Vsy              Y ELECTRODE : $\dfrac{Vsy}{2}$

Z ELECTRODE : $\dfrac{Vsz}{2}$      Z ELECTRODE : −Vsz

X ELECTRODE : 0V                  X ELECTRODE : 0V

# FIG. 7

Y ELECTRODE : Vsy

Z ELECTRODE : $-\dfrac{Vsz}{2}$

X ELECTRODE : 0V

Y ELECTRODE : $-\dfrac{Vsy}{2}$

Z ELECTRODE : Vsz

X ELECTRODE : 0V